# EUROPEAN PATENT APPLICATION

(11) **EP 4 768 310 A1**
(43) Date of publication of application: **01.07.2026**
(21) Application number: 25221328.5
(22) Date of filing: 08.12.2025
(51) Int. Cl.: B60L 15/00

(54) **BATTERY ELECTRIC VEHICLE**

(30) Priority: 26.12.2024 JP 2024230654
(71) Applicant: Toyota Jidosha Kabushiki Kaisha, Toyota-shi, Aichi-ken 471-8571 (JP)
(72) Inventor: TANAKA, Takeru, TOYOTA-SHI, AICHI-KEN, 471-8571 (JP); YUASA, Ryohei, TOYOTA-SHI, AICHI-KEN, 471-8571 (JP); FURUHASHI, Yusuke, TOYOTA-SHI, AICHI-KEN, 471-8571 (JP)
(74) Representative: Cabinet Beau de Loménie

(57) **Abstract**

A battery electric vehicle (100) includes a processor and a shifter. The processor is configured to switch between an automatic control mode and a manual operation mode of the battery electric vehicle (100) according to operation by a driver of the battery electric vehicle (100). The processor is configured to: when a first condition is met while the battery electric vehicle (100) is in the automatic control mode, reject a request of the driver for switching from the automatic control mode to the manual operation mode; and when a second condition is met while the battery electric vehicle (100) is in the manual operation mode, switch the manual operation mode to the automatic control mode. The first condition and the second condition are different from each other.

## Description

### BACKGROUND OF THE INVENTION

### 1. Field of the Invention

The present disclosure relates to a battery electric vehicle configured to be able to switch an output characteristic of an electric motor in multiple levels, and relates particularly to a battery electric vehicle capable of traveling in a manual operation mode in which it accepts selection of a shift position performed by manual operation of a shifter.

### 2. Description of Related Art

Japanese Patent No. 7529003 (JP 7529003 B) discloses a technology in which a battery electric vehicle is fitted with a sequential shifter and an output characteristic of an electric motor is changed in multiple levels in response to operation of the sequential shifter. This technology allows a driver to enjoy, in a battery electric vehicle, driving sensations like those of an engine vehicle equipped with a manual transmission.

### SUMMARY OF THE INVENTION

A battery electric vehicle will be considered that has an automatic control mode in which it performs traveling as an ordinary battery electric vehicle and a manual operation mode in which it provides a driver with driving sensations like those of an engine vehicle equipped with a manual transmission. In the manual operation mode, an output characteristic of an engine in an engine vehicle equipped with a manual transmission is reproduced by means of a torque of an electric motor. However, the output characteristic of the engine may fail to be fully reproduced under given circumstances, such as where a restriction is put on an output of a battery. In addition, when, for example, breakdown of an operation member for performing gear shifting operation occurs, operation of an engine vehicle equipped with a manual transmission may fail to be fully reproduced. Consideration will be given to selection of a control mode upon arising of a situation where the behavior of an engine vehicle equipped with a manual transmission may thus fail to be fully reproduced.

A battery electric vehicle according to a first aspect of the present disclosure uses an electric motor as a motive power device for traveling. The battery electric vehicle includes a processor that is configured to control the battery electric vehicle, and a shifter. The processor is configured to switch between an automatic control mode and a manual operation mode of the battery electric vehicle according to operation by a driver of the battery electric vehicle. The automatic control mode is a mode in which the battery electric vehicle travels as an ordinary battery electric vehicle, and the manual operation mode is a mode in which the battery electric vehicle travels so as to simulate an engine vehicle equipped with a manual transmission by accepting virtual gear shifting operation through the shifter. The processor is configured to: when a first condition is met while the battery electric vehicle is in the automatic control mode, reject a request of the driver for switching from the automatic control mode to the manual operation mode; and when a second condition is met while the battery electric vehicle is in the manual operation mode, switch the manual operation mode to the automatic control mode. The first condition and the second condition are different conditions.

In the above-described battery electric vehicle, when the first condition is met while control by the automatic control mode is executed, a request of the driver for switching from the automatic control mode to the manual operation mode is rejected. This can prevent a situation where the manual operation mode is unconditionally permitted also when an engine vehicle equipped with a manual transmission cannot be fully reproduced, thereby giving the driver a feeling of strangeness. When the second condition is met while control by the manual operation mode is executed, the manual operation mode is canceled and switched to the automatic control mode. This can prevent a situation where the manual operation mode is unconditionally continued also when continuing the manual operation mode is inappropriate. The first condition and the second condition are different conditions. This makes it possible to respond appropriately according to the circumstances, and can reduce the likelihood that switching the manual operation mode to the automatic control mode ends up with causing a feeling of strangeness to the driver.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a view showing the configuration of a control system of a battery electric vehicle according to an embodiment;
FIG. 2 is a block diagram showing functions of a BEV-ECU;
FIG. 3 is a table showing an example of case-by-case use of notification by a buzzer sound and notification by displaying of a message when a manual operation mode is rejected;
FIG. 4 is a table comparing circumstances where a rejection condition is met and circumstances where a cancelation condition is met;
FIG. 5 is a table showing an example of case-by-case use of notification by a buzzer sound and notification by displaying of a message when the manual operation mode is canceled; and
FIG. 6 is a view for describing switching among a selectable-deceleration mode, a fixed-deceleration mode, and the manual operation mode.

### DETAILED DESCRIPTION OF EMBODIMENTS

### 1. Configuration of Control System of Battery Electric Vehicle

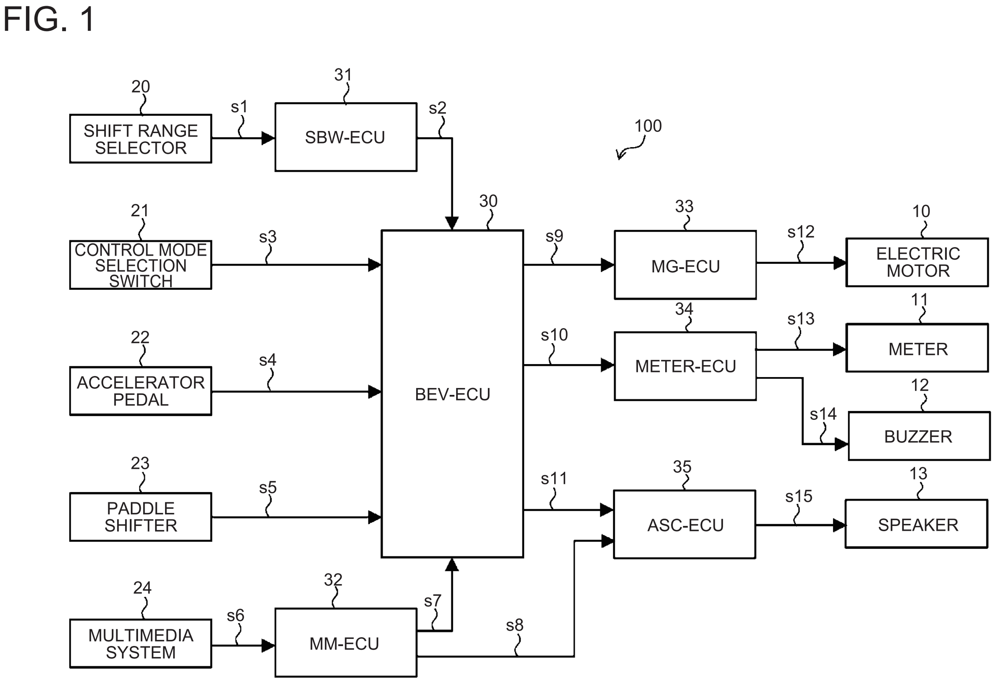

FIG. 1 is a view showing the configuration of a control system of a battery electric vehicle 100 according to an embodiment of the present disclosure. The battery electric vehicle 100 is a battery electric vehicle (BEV) that travels on electric energy stored in a battery. The control system of the battery electric vehicle 100 includes, as control targets, an electric motor 10 that is a motive power device for traveling, a meter 11 that gives visual information to a driver, and a buzzer 12 and a speaker 13 that give auditory information to the driver. As control devices that control these control targets, the battery electric vehicle 100 is fitted with a plurality of electronic control units (ECUs) and input devices that input instructions from the driver into these ECUs. The ECUs include a battery electric vehicle (BEV)-ECU 30, a shift-by-wire (SBW)-ECU 31, a multimedia (MM)-ECU 32, a motor-generator (MG)-ECU 33, a meter-ECU 34, and an active sound control (ASC)-ECU 35. The ECU includes one or more processors. Input interfaces include a shift range selector 20, a control mode selection switch 21, an accelerator pedal 22, a paddle shifter 23, and a multimedia system 24.

The shift range selector 20 is an input interface for the driver to select a shift range. Selectable shift ranges include, for example, a parking range, a reverse range, a neutral range, and a drive range. When the driver operates the shift range selector 20, a signal s1 according to a position of an operation member of the shift range selector 20 is output from the shift range selector 20 to the SBW-ECU 31. The SBW-ECU 31 determines the shift range based on the input signal s1 and outputs a signal s2 including information on the selected shift range to the BEV-ECU 30.

The control mode selection switch 21 is an input interface for switching a control mode of the battery electric vehicle 100 between an automatic control mode and a manual operation mode. The automatic control mode is a mode in which the electric motor 10 is controlled with a normal output characteristic according to an output request from the driver. The manual operation mode is a mode for making the battery electric vehicle 100 behave like an engine vehicle in which manual gear shifting is possible. In the manual operation mode, the output characteristic of the electric motor 10 can be switched in multiple levels by operation of the paddle shifter 23 to be described later. The control mode selection switch 21 may be an alternate switch or may be a momentary switch. When the driver operates the control mode selection switch 21, a signal s3 according to the control mode identified by that operation is output from the control mode selection switch 21 to the BEV-ECU 30.

The accelerator pedal 22 is an input interface that acquires, as the driver's acceleration request, an amount of pressing when the driver presses the accelerator pedal 22. When the driver presses the accelerator pedal 22, a signal s4 according to the amount of pressing is output from an accelerator pedal stroke sensor to the BEV-ECU 30.

The paddle shifter 23 is an input interface composed of a pair of right and left paddles attached to a steering wheel or a steering column. When the driver pulls one of the paddles toward himself or herself, a signal s5 corresponding to the paddle that has been pulled is output from the paddle shifter 23 to the BEV-ECU 30. When the manual operation mode has been selected, the paddle shifter 23 serves as an input interface for switching the shift position in multiple levels. However, the battery electric vehicle 100 is not fitted with a real transmission. The term "shift position" here refers not to a shift position of an actual transmission but to one of parameters of a physical model, to be described later, that is used for calculation of an engine torque. In the manual operation mode, the signal s5 that is output when the right-side paddle is pulled is a signal requesting upshifting, and the signal s5 that is output when the left-side paddle is pulled is a signal requesting downshifting. On the other hand, when the automatic control mode has been selected, the paddle shifter 23 serves as an input interface for switching the efficacy of regenerative braking in multiple levels. In the automatic control mode, the signal s5 that is output when the right-side paddle is pulled is a signal requesting weakening the regenerative braking, and the signal s5 that is output when the left-side paddle is pulled is a signal requesting intensifying the regenerative braking.

The multimedia system 24 is an input interface fitted with a touch screen that displays various information, such as navigation and audio settings, and accepts the driver's touch operation. The driver can perform various settings for the battery electric vehicle 100 by operation of the touch screen. When the driver operates the touch screen, a signal s6 according to the content of that operation is output from the multimedia system 24 to the MM-ECU 32. The MM-ECU 32 determines a setting requested by the driver based on the input signal s6. When the setting requested by the driver is a driving mode, the MM-ECU 32 outputs a signal s7 including information on the driving mode selected by the driver to the BEV-ECU 30. The driving mode can be set in the manual operation mode, and the driver can select one driving mode suited to his or her preference from a plurality of driving modes. When the setting requested by the driver is turning the speaker 13 on or off or a sound volume thereof, the MM-ECU 32 outputs a signal s8 including information on turning the speaker 13 on or off or the sound volume thereof to the ASC-ECU 35.

Based on the input signals s2, s3, s4, s5, and s7, the BEV-ECU 30 calculates a torque to be output by the electric motor 10 (hereinafter referred to as "motor torque"). Besides these signals, other information including at least a vehicle speed is used in the calculation of the motor torque. The vehicle speed is measured using a speed sensor provided on each wheel. The BEV-ECU 30 calculates the motor torque by a method according to the control mode identified by the signal s3. In the automatic control mode, the BEV-ECU 30 calculates the motor torque based mainly on the signal s4 and the vehicle speed. In the manual operation mode, the BEV-ECU 30 calculates the motor torque based mainly on the signals s4, s5, and s7 and the vehicle speed. Details of the calculation method of the motor torque in each control mode will be described later. The BEV-ECU 30 outputs a signal s9 including information on the motor torque obtained by the calculation to the MG-ECU 33. The MG-ECU 33 generates a signal s12 for PWM control of the electric motor 10 based on the signal s9, and controls the electric motor 10 by the signal s12.

The BEV-ECU 30 outputs, to the meter-ECU 34, a signal s10 including information to be displayed on the meter 11 and a buzzer sounding request. The information to be displayed on the meter 11 includes, for example, the control mode that has been selected, the shift position when the manual operation mode has been selected, and a virtual engine rotation speed. The virtual engine rotation speed is one of the parameters of the physical model that is used for calculation of the motor torque in the manual operation mode. The meter-ECU 34 generates a signal s13 for displaying these information and controls the meter 11 by the signal s13. The buzzer sounding request is output, for example, when letting the driver know a timing of downshifting or upshifting. When the signal s10 includes the buzzer sounding request, the meter-ECU 34 generates a signal s14 and makes the buzzer 12 sound by the signal s14.

The BEV-ECU 30 outputs, to the ASC-ECU 35, a signal s11 including information that is used for generation of a pseudo-engine sound. The pseudo-engine sound is a sound that simulates an exhaust sound of an engine vehicle and that is emitted from the speaker 13 when the manual operation mode has been selected. The information used for generation of the pseudo-engine sound includes, for example, the virtual engine rotation speed, a virtual engine torque, and a virtual shift position. The virtual engine torque is one of the parameters of the physical model that is used for calculation of the motor torque in the manual operation mode. The ASC-ECU 35 generates a signal s15 for generating the pseudo-engine sound based on these information and controls the speaker 13 by the signal s15.

### 2. Functions of BEV-ECU

Next, functions of the BEV-ECU 30 will be described. The BEV-ECU 30 includes at least a processor (processing circuit) and a memory. The memory includes an RAM that temporarily records data, and an ROM that stores programs that are executable in the processor and various data relating to the programs. Each program is composed of a plurality of instructions. The processor retrieves programs and data from the memory and executes them to generate the signal s9 to be output to the MG-ECU 33, the signal s10 to be output to the meter-ECU 34, and the signal s11 to be output to the ASC-ECU 35.

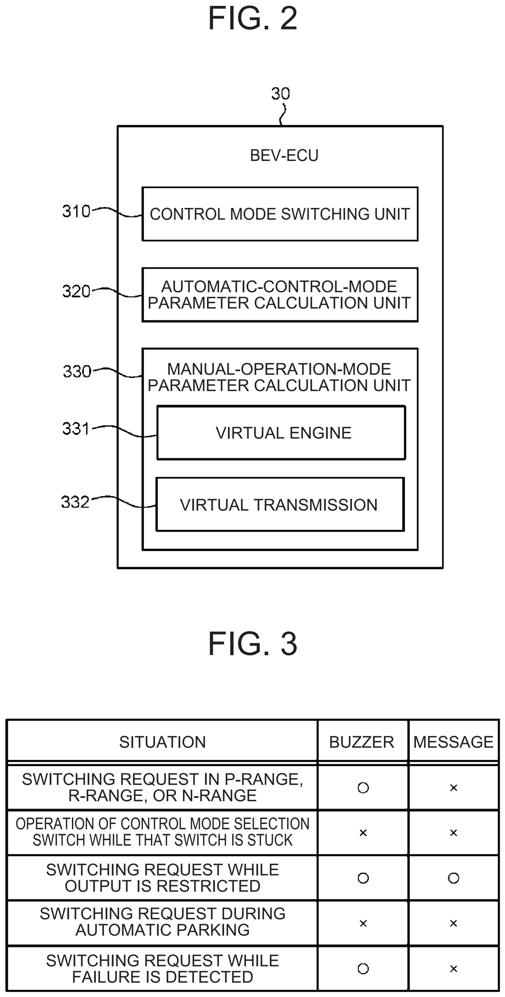

FIG. 2 is a block diagram showing the functions of the BEV-ECU 30. The BEV-ECU 30 has functions as a control mode switching unit 310, an automatic-control-mode parameter calculation unit 320, and a manual-operation-mode parameter calculation unit 330. These functions are realized as the processor executes one or more programs stored in the memory of the BEV-ECU 30.

The control mode switching unit 310 switches a mode of output control of the electric motor 10 with respect to operation input from the driver. Control modes that can be switched by the control mode switching unit 310 are the above-described automatic control mode and manual operation mode. The control mode switching unit 310 switches the control mode in accordance with the signal s3 input from the control mode selection switch 21.

When the control mode is switched to the automatic control mode by the control mode switching unit 310, the BEV-ECU 30 functions as the automatic-control-mode parameter calculation unit 320. The automatic-control-mode parameter calculation unit 320 performs output control according to the shift range selected by the shift range selector 20. For example, when the selected shift range is the D-range, the automatic-control-mode parameter calculation unit 320 acquires an accelerator operation amount from the signal s4 of the accelerator pedal 22 and acquires the vehicle speed from signals of the speed sensors (not shown). The automatic-control-mode parameter calculation unit 320 has a motor torque map in which the accelerator operation amount and the vehicle speed are parameters. The automatic-control-mode parameter calculation unit 320 inputs the accelerator operation amount and the vehicle speed into the motor torque map to thereby calculate a motor torque to be generated by the electric motor 10, and outputs the signal s9 including information on the calculated motor torque to the MG-ECU 33.

When the control mode is switched to the manual operation mode by the control mode switching unit 310, the BEV-ECU 30 functions as the manual-operation-mode parameter calculation unit 330. The manual-operation-mode parameter calculation unit 330 executes a process of calculating a drive wheel torque to be generated by drive wheels and a process of calculating the motor torque based on the drive wheel torque.

The manual-operation-mode parameter calculation unit 330 calculates the drive wheel torque using a physical model of an engine vehicle. The physical model includes a virtual engine 331 modeled after an engine and a virtual transmission 332 modeled after a transmission of which manual gear shifting is possible. The virtual transmission 332 includes a model of an automated clutch.

In the virtual engine 331, a relationship between the virtual engine rotation speed and the virtual engine torque is specified for each accelerator operation amount. A rotation speed vs. torque characteristic of the virtual engine 331 can be set to a characteristic based on an assumption of a gasoline engine as well as to a characteristic based on an assumption of a diesel engine. It can also be set to a characteristic based on an assumption of a naturally aspirated engine as well as to a characteristic based on an assumption of a supercharged engine. The virtual engine rotation speed is calculated based on a virtual gear ratio calculated in the virtual transmission 332, a virtual speed reduction ratio from the virtual transmission 332 to the drive wheels, and the vehicle speed. The virtual engine torque calculated in the virtual engine 331 is input into the virtual transmission 332.

In the virtual transmission 332, the virtual gear ratio is set for each shift position. For example, when the shift positions include first gear to sixth gear, a highest virtual gear ratio is set for first gear, and the virtual gear ratio becomes lower in the order of second gear, third gear, fourth gear, fifth gear, and sixth gear. The virtual transmission torque is calculated using the virtual gear ratio calculated in the virtual transmission 332 and the virtual engine torque input from the virtual engine 331. The manual-operation-mode parameter calculation unit 330 calculates the drive wheel torque from the virtual transmission torque and the speed reduction ratio.

The manual-operation-mode parameter calculation unit 330 calculates the motor torque by multiplying the drive wheel torque by an actual speed reduction ratio from an output shaft of the electric motor 10 to the drive wheels, and outputs the signal s9 including information on the calculated motor torque to the MG-ECU 33. However, when the battery electric vehicle 100 includes the electric motor 10 on each of a front wheel side and a rear wheel side, the manual-operation-mode parameter calculation unit 330 calculates a motor torque of the front electric motor based on a part of the drive wheel torque that is allocated to front wheels and calculates a motor torque of the rear electric motor based on a part of the drive wheel torque that is allocated to rear wheels.

### 3. Rejection of Switching Request and Notification of Rejection

As described above, the driver of the battery electric vehicle 100 can switch between the automatic control mode and the manual operation mode by the control mode selection switch 21. When the control mode is switched to the manual operation mode, control of the electric motor 10 is performed so as to reproduce the virtual engine and the virtual transmission.

However, depending on the state of the vehicle, a situation can arise where permitting switching of the control mode is inappropriate. For example, when an amount of charge of the battery falls short of an amount of charge required to generate in the electric motor 10 a motor torque for reproducing the virtual engine, the virtual engine and the virtual transmission in the manual operation mode may fail to be reproduced. Permitting switching to the manual operation mode in such a case may cause a feeling of strangeness to the driver.

Therefore, even when the driver requests switching to the manual operation mode, the BEV-ECU 30 rejects the switching request if a rejection condition is met. The rejection condition may also be called a first condition. When the driver requests switching of the control mode, the BEV-ECU 30 determines whether the battery electric vehicle 100 is in a state in which switching the control mode is appropriate. When it is determined based on the vehicle state of the battery electric vehicle 100 that switching the control mode is inappropriate, the rejection condition is met and the switching request is rejected. This can prevent a situation where switching of the control mode, particularly switching from the automatic control mode to the manual operation mode is unconditionally permitted, thereby causing a feeling of strangeness to the driver. When the BEV-ECU 30 has rejected the switching request, the BEV-ECU 30 notifies the driver that the rejection has been made. This notification may be called rejection notification. Performing the notification can prevent a situation where the driver, unable to understand the circumstances, becomes confused.

The rejection notification includes notification by auditory information and notification by visual information. The auditory information is a buzzer sound output from the buzzer 12. The visual information is a message displayed on the meter 11. In the case where the notification by a buzzer sound is performed, a signal s14 including information on the notification is output from the BEV-ECU 30 to the buzzer 12 and a buzzer sound is emitted by the buzzer 12. In the case where the notification by a message is performed, a signal s13 including information on a content to be displayed is output from the BEV-ECU 30 to the meter 11 and a message is displayed on the meter 11.

The notification by a buzzer sound merely conveys to the driver that the switching request has been rejected by a sound effect, whereas the notification by a message can convey to the driver that the rejection has been made and why by text. As such, the BEV-ECU 30 may use the notification by a buzzer and the notification by a message on a case-by-case basis. As an example of case-by-case use, when the reason for the rejection of the switching request is clear to the driver, notification may be performed by a buzzer sound alone without displaying of a message, and when the reason is not clear, both the notification by a buzzer sound and the notification by a message may be performed. Using the notifications on a case-by-case basis makes it possible to prevent annoyance caused by notification of superfluous information while notifying information that is necessary for the driver.

When it is clear to the driver that the switching request has been rejected, even without notification being performed, the BEV-ECU 30 may perform neither of the notification by a buzzer sound and the notification by displaying of a message.

FIG. 3 shows, in the form of a table, examples of situations where a request for switching from the automatic control mode to the manual operation mode is rejected by the BEV-ECU 30 and an example of case-by-case use of the notifications in these situations.

A first example is a situation where switching to the manual operation mode is requested in a state where one of the parking range, the reverse range, and the neutral range has been selected by the shift range selector 20. Here, the manual operation mode is a control mode that is available only for forward traveling. Therefore, a request for switching to the manual operation mode in such a situation is rejected. In this case, as the fact that the rejection is made is not necessarily clear to the driver, the notification by a buzzer sound is performed. On the other hand, from the state of the shift range selector 20 and what is displayed on the meter 11, the driver can grasp that the current driving mode is not a mode for forward traveling. Thus, it is easy for the driver who has been made aware by the notification from the buzzer 12 that the rejection has been made to infer the reason for the rejection. In this case, therefore, the rejection is notified by a buzzer sound alone and the displaying of a message is not performed.

A second example is a situation where the driver tries to request switching to the manual operation mode by operating the control mode selection switch 21 in a state where the control mode selection switch 21 is stuck. Here, a case is assumed where the control mode selection switch 21 has physically broken down and become immovable. In this case, since the switch is physically immovable, the driver can intuitively grasp that the control mode selection switch 21 has broken down, and it is clear to the driver that the switching request has not been accepted. In this case, therefore, neither of the notification by a buzzer sound and the displaying of a message is performed.

Not only when physical breakdown of the control mode selection switch 21 has occurred but also when the signal output from the control mode selection switch 21 is stuck in an "on" state, the BEV-ECU 30 having detected the breakdown of the control mode selection switch 21 rejects the switching request. Since the request for switching the control mode due to sticking of the signal is not made by the driver's operation, neither of the notification by a buzzer sound and the notification by a message is performed.

A third example is a situation where switching to the manual operation mode is requested while the output of the battery is restricted. The MG-ECU 33 may put a restriction on the output of the battery depending on the states of the battery and the electric motor 10 including a temperature of a battery unit and a state-of-charge (SOC) of the battery. In this case, the torque required to reproduce the virtual engine and the virtual transmission may fail to be sufficiently output from the electric motor 10, and therefore the request for switching to the manual operation mode is rejected. In such a situation, as it is not clear to the driver that the switching request has been rejected, the notification by a buzzer sound is performed. In this case, that the output of the battery is restricted is displayed on the meter 11 etc. However, it may be not easy for the driver to think of the restriction on the output of the battery and the rejection of the switching request in connection with each other. Therefore, along with the notification by a buzzer sound, a message showing that the switching request has been rejected and why is displayed on the meter 11.

A fourth example is a situation where switching to the manual operation mode is requested while an automatic parking function is active. The state where the automatic parking function is active is a state where the driver is leaving driving operation to the system of the battery electric vehicle 100, and is therefore not compatible with the manual operation mode in which the driver manually performs gear shifting operation. For this reason, the switching request is rejected. Here, situations where the automatic parking function is activated are limited situations such as during parking and during pulling out of a garage, and moreover it is apparent to the driver that the driving operation is being automatically performed. Thus, it is clear to the driver that the switching request is not accepted and why. For this reason, neither of the notification by a buzzer sound and the displaying of a message is performed.

A fifth example is a situation where switching to the manual operation mode is requested in a state where failure of the vehicle has been detected. In the state where failure of the vehicle has been detected, the virtual engine and the virtual transmission may fail to be reproduced, and therefore the request for switching to the manual operation mode is rejected. In this case, a warning message showing that failure has been detected is displayed on the meter 11 etc. However, it is possible that the driver who has requested switching to the manual operation mode in that state may be unaware of the warning message. Therefore, the notification by a buzzer sound is performed to clearly show the driver that the switching request has been rejected and call the driver's attention. On the other hand, it is considered to be easy for the driver who has become aware that the rejection has been made to infer the reason for the rejection from the warning message showing detection of failure. Therefore, notification of the reason for the rejection by displaying a message is not performed.

A state of the vehicle in which switching the control mode from the automatic control mode to the manual operation mode is determined to be inappropriate may be called a non-switchable state. The above-described first example is an example in which the vehicle state is determined to be the non-switchable state based on the shift range that has been selected by the shift range selector 20. The above-described second example is an example in which the battery electric vehicle 100 is determined to be in the non-switchable state because the control mode selection switch 21 is in a sticking state. Similarly, also for the third to fifth examples, the non-switchable state is determined based on the state of the vehicle.

A situation where the driver's request is rejected by the BEV-ECU 30 can also arise in situations other than a situation where switching to the manual operation mode is requested. One example of such situations is a situation where automatic cruise control is requested while the control mode has been set to the manual operation mode. It is considered that, while the manual operation mode has been selected, the driver wishes to voluntarily perform operation that the driver need not perform in the automatic control mode. Thus, activating the automatic cruise control while control by the manual operation mode is executed is considered not to go along with the driver's wish, and therefore the request for turning the automatic cruise control on is rejected. In this case, notification showing the rejection is performed by a buzzer sound. As the reason for the rejection is considered to be easy for the driver to infer, notification by a message is not performed. Notification showing the rejection may be performed by a buzzer of an automatic cruise control system.

### 4. Cancelation of Manual Operation Mode

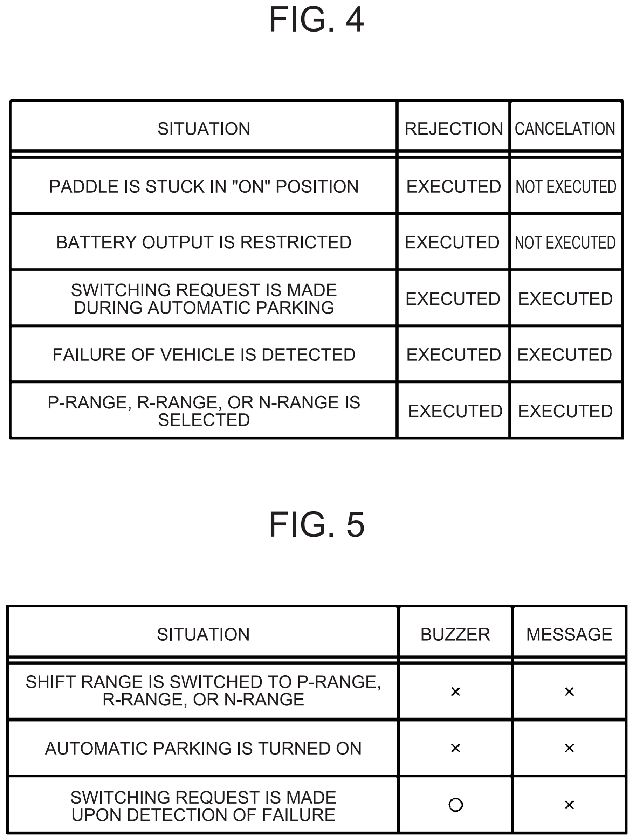

In the preceding section, a description has been given of rejection of a request for switching to the manual operation mode when the battery electric vehicle 100 has fallen into the non-switchable state while traveling in the automatic control mode. Next, a case will be considered where the rejection condition is met while the battery electric vehicle 100 has already been traveling in the manual operation mode. The BEV-ECU 30 does not always cancel the manual operation mode and forcibly switch to the automatic control mode whenever the battery electric vehicle 100 falls into a state where the virtual engine and the virtual transmission may fail to be reproduced. This is because when the manual operation mode is canceled, a drive force level difference due to switching of the control mode occurs, which may evoke a feeling of strangeness in the driver. Hereinafter, a condition under which the manual operation mode is canceled will be referred to as "cancelation condition". The cancelation condition may also be called a second condition. To make a drive force level difference less likely to occur, the cancelation condition is set to be a stricter condition than the rejection condition. FIG. 4 shows, in the form of a table, examples of situations where the manual operation mode is rejected and whether the cancelation condition is met in each situation.

A first example is a state where at least one of the paddles of the paddle shifter 23 is stuck in an "on" position. Here, a situation is assumed where the paddle is stuck in the "on" position due to physical breakdown. In such a case, it is considered that manual gear shifting operation in the manual operation mode fails to be fully realized, and therefore the request for switching to the manual operation mode is rejected. In this case, although a restriction is put on gear shifting operation performed by the driver, this does not mean that the virtual engine and the virtual transmission cannot be reproduced. Since the driver can recognize the physical breakdown of the paddle from sensations of operating it, the driver is considered to wish to continue traveling in the manual operation mode, albeit in a state where part of the gear shifting operation cannot be performed, until the driver voluntarily requests switching to the automatic control mode. Therefore, the cancelation condition is not met, and when the battery electric vehicle 100 has already been traveling in the manual operation mode, the manual operation mode is continued.

A second example is a state where the output of the battery is restricted. Under such circumstances, the virtual engine and the virtual transmission may fail to be fully reproduced, and therefore the request for switching to the manual operation mode is rejected. However, the driver can recognize that the output of the battery is restricted from what is displayed on the meter 11, and the driver is considered to wish to continue traveling in the manual operation mode, albeit in the restricted state, until the driver voluntarily selects switching to the automatic control mode. Therefore, the cancelation condition is not met, and when the battery electric vehicle 100 has already been traveling in the manual operation mode, the manual operation mode is continued.

A third example is a state where the automatic parking function is activated. Under such circumstances, completing parking or pulling out of a garage by the automatic parking function is prioritized and the request for switching to the manual operation mode is rejected. Moreover, the cancelation condition is met, firstly because when the automatic parking function is active, the driver is in the state of leaving the operation to the system of the battery electric vehicle 100, and therefore switching to the automatic control mode is considered not to go against the driver's intention, and secondly because the vehicle during parking or an action of pulling out of a garage is kept in a low-vehicle-speed state and therefore a rapid change in the drive force is less likely to occur.

A fourth example is a state where vehicle failure of the battery electric vehicle 100 is detected. In this case, both the rejection condition and the cancelation condition are met. The driver's request for switching to the manual operation mode is rejected, and when the battery electric vehicle 100 is traveling in the manual operation mode, the manual operation mode is canceled and automatically switched to the automatic control mode. This is because in the state where failure has been detected, not only can the virtual engine and the virtual transmission not be reproduced, but also it is necessary to secure safety by immediately shifting the battery electric vehicle 100 to a fail-safe mode.

A fifth example is a state where one of the parking range, the reverse range, and the neutral range has been selected by the driver. Since the manual operation mode is a mode restricted to during forward traveling, in this case, the rejection condition is met. Since operation of the shift range is operation reflecting the driver's intention, the driver's intention is prioritized and the cancelation condition is met, so that the manual operation mode is switched to the automatic control mode.

Although the cancelation condition is not met in the first and second examples, switching to the manual operation mode is rejected after the driver voluntarily requests switching to the automatic control mode and the control mode is switched to the automatic control mode. When canceling the manual operation mode and switching to the automatic control mode, the BEV-ECU 30 may perform a process of gradually changing the torque output from the electric motor 10 to prevent a rapid change in the drive force.

### 5. Notification of Cancelation

When the BEV-ECU 30 has canceled the manual operation mode, the BEV-ECU 30 performs cancelation notification of notifying the driver that the cancelation has been made. The cancelation notification includes notification by auditory information and notification by visual information. The notification by auditory information is a buzzer sound emitted from the buzzer 12. The notification by visual information is displaying of a message on the meter 11. Like the rejection notification, the notification by auditory information and the notification by visual information may be used on a case-by-case basis. That is, when the reason for cancelation is clear to the driver, only the notification by a buzzer sound may be performed, and when the reason is not clear, a message showing that cancelation has been made and the reason for the cancelation may be displayed on the meter 11.

FIG. 5 shows, in the form of a table, whether the notification by a buzzer is performed and whether the notification by a message is performed when the manual operation mode is canceled.

When the cancelation condition is met as the shift range is switched to one of the parking range, the reverse range, and the neutral range, and when the cancelation condition is met as automatic parking is turned on by the driver, neither of the notification by a buzzer sound and the notification by a message is performed. This is because these operations reflect the driver's intention, and it is considered to be clear to the driver that the manual operation mode has been canceled and why.

When the manual operation mode is canceled as failure of the vehicle is detected, the notification by a buzzer sound is performed but the notification by displaying of a message is not performed. In this case, it is necessary to make the driver recognize that cancelation has been made due to detection of failure, and therefore the notification by a buzzer sound is performed. However, the driver can recognize the occurrence of failure from what is displayed on the meter 11 etc., and the reason for the cancelation is considered to be clear to the driver. Therefore, the displaying of a message is not performed.

### 6. Multiple Modes in Automatic Control Mode

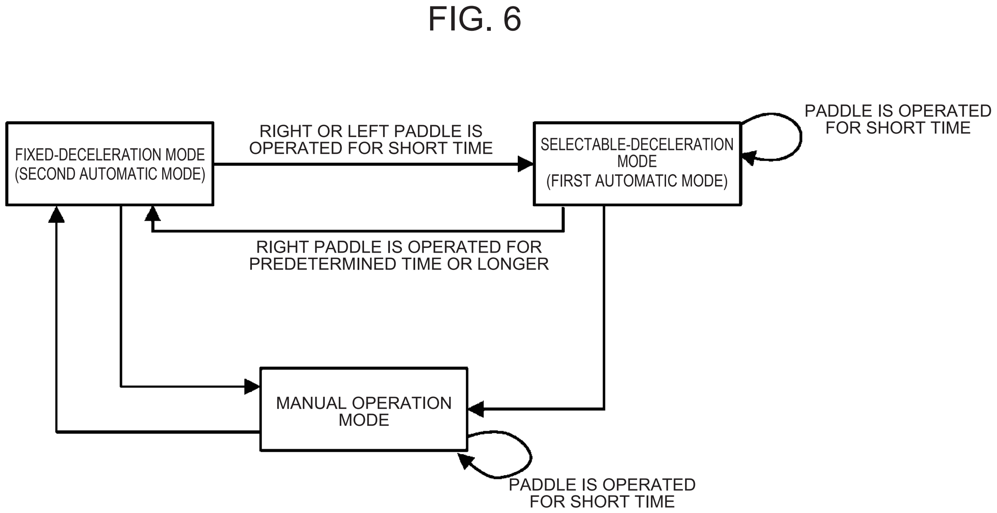

The automatic control mode may further include multiple modes. FIG. 6 shows an example of operation for switching the control mode among a selectable-deceleration mode and a fixed-deceleration mode that are included in the automatic control mode, and the manual operation mode.

The selectable-deceleration mode is a mode in which the driver can switch the deceleration, i.e., the efficacy of the regenerative braking. The driver can reduce the deceleration by operating the right-side paddle of the paddle shifter 23 for a short time, and increase the deceleration by operating the left-side paddle for a short time. The fixed-deceleration mode is a mode in which the deceleration is fixed. When the control mode is set to the fixed-deceleration mode, the driver cannot switch the deceleration until the control mode is switched.

The driver can switch to the manual operation mode from whichever of the selectable-deceleration mode and the fixed-deceleration mode. On the other hand, from the manual operation mode, switching to only the fixed-deceleration mode is permitted while switching from the manual operation mode to the selectable-deceleration mode is not permitted. This is to prevent a situation where sudden switching to the selectable-deceleration mode causes the driver to change the deceleration by erroneous operation.

Here, the paddle shifter 23 is used also as an operation member for switching the control mode between the selectable-deceleration mode and the fixed-deceleration mode. Operation for switching from the fixed-deceleration mode to the selectable-deceleration mode is to operate the right-side or left-side paddle for a short time. Operation for switching from the selectable-deceleration mode to the fixed-deceleration mode is to operate the right-side paddle for a predetermined time or longer. That is, in the selectable-deceleration mode, if a time for which the driver is pulling the right-side paddle is shorter than the predetermined time, a regenerative braking force is switched, and if the driver continues to pull the right-side paddle for the predetermined time or longer, the control mode is switched to the fixed-deceleration mode.

Here, the BEV-ECU 30 may determine whether a second rejection state for rejecting switching from the fixed-deceleration mode to the selectable-deceleration mode has arisen based on the state of the battery electric vehicle 100. When the battery electric vehicle 100 falls into the second rejection state while control by the fixed-deceleration mode is executed, the second rejection condition is met and switching to the selectable-deceleration mode is rejected. The second rejection condition may also be called a third condition. An example of the second rejection state is a state where breakdown of the paddle shifter 23 has occurred. For example, when at least one of the paddles of the paddle shifter 23 falls into a sticking state and no longer operates normally while control by the fixed-deceleration mode is executed, the BEV-ECU 30 determines that the second rejection condition is met and rejects a request for switching to the selectable-deceleration mode even when the switching request is made by the driver.

Thus, when the second rejection condition is met, switching from the fixed-deceleration mode to the selectable-deceleration mode is rejected. This can prevent a situation where the control mode is switched to the selectable-deceleration mode when the paddle shifter 23 does not operate normally, ending up with the driver feeling inconvenienced due to being unable to perform operation as usual.

## Claims

1. A battery electric vehicle (100) that uses an electric motor (10) as a motive power device for traveling, the battery electric vehicle (100) comprising:
a processor configured to control the battery electric vehicle (100); and
a shifter (23),
wherein the processor is configured to:
switch between an automatic control mode and a manual operation mode of the battery electric vehicle (100) according to operation by a driver of the battery electric vehicle (100), the automatic control mode being a mode in which the battery electric vehicle (100) travels as an ordinary battery electric vehicle, the manual operation mode being a mode in which the battery electric vehicle (100) travels so as to simulate an engine vehicle equipped with a manual transmission by accepting virtual gear shifting operation through the shifter (23);
when a first condition is met while the battery electric vehicle (100) is in the automatic control mode, reject a request of the driver for switching from the automatic control mode to the manual operation mode; and
when a second condition is met while the battery electric vehicle (100) is in the manual operation mode, switch the manual operation mode to the automatic control mode, and
wherein the first condition and the second condition are different from each other.

2. The battery electric vehicle (100) according to claim 1, wherein the second condition is set to be a stricter condition than the first condition.

3. The battery electric vehicle (100) according to claim 2, wherein the first condition is met when at least one of the following occurs while the battery electric vehicle (100) is in the automatic control mode: i) a failure in the battery electric vehicle (100) is detected; ii) an automatic parking function of the battery electric vehicle (100) is activated; iii) an output of the electric motor (10) is restricted; and iv) the shifter (23) breaks down.

4. The battery electric vehicle (100) according to claim 2, wherein the second condition is met when at least one of the following occurs while the battery electric vehicle (100) is in the manual operation mode: i) a failure of the battery electric vehicle (100) is detected and ii) an automatic parking function of the battery electric vehicle (100) is activated.

5. The battery electric vehicle (100) according to claim 2, wherein:
the first condition is met when either an output of the electric motor (10) is restricted or the shifter (23) breaks down while the battery electric vehicle (100) is in the automatic control mode; and
the second condition is not met even when either the output of the electric motor (10) is restricted or the shifter (23) breaks down while the battery electric vehicle (100) is in the manual operation mode.

6. The battery electric vehicle (100) according to claim 5, wherein:
the automatic control mode includes a fixed-deceleration mode in which a deceleration of the battery electric vehicle (100) is fixed, and a selectable-deceleration mode in which the deceleration of the battery electric vehicle (100) is switched according to operation by the driver;
when the shifter (23) breaks down while the battery electric vehicle (100) is in the automatic control mode, a third condition is met; and
when the third condition is met, the processor is configured to reject a request for switching from the fixed-deceleration mode to the selectable-deceleration mode.
